(19) Europäisches Patentamt
European Patent Office
Office européen des brevets

(11) **EP 4 318 629 A1**

(12) **EUROPEAN PATENT APPLICATION**
published in accordance with Art. 153(4) EPC

(43) Date of publication:
**07.02.2024 Bulletin 2024/06**

(21) Application number: **22775705.1**

(22) Date of filing: **23.03.2022**

(51) International Patent Classification (IPC):
**H01M 4/13** (2010.01)      **H01M 4/139** (2010.01)
**H01G 11/28** (2013.01)

(52) Cooperative Patent Classification (CPC):
**H01G 11/28; H01M 4/13; H01M 4/139;** Y02E 60/10

(86) International application number:
**PCT/JP2022/013652**

(87) International publication number:
**WO 2022/202923 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2021   JP 2021050217**

(71) Applicant: **AGC INC.**
**Chiyoda-ku,**
**Tokyo 1008405 (JP)**

(72) Inventor: **WADA, Shinji**
**Tokyo 100-8405 (JP)**

(74) Representative: **Müller-Boré & Partner**
**Patentanwälte PartG mbB**
**Friedenheimer Brücke 21**
**80639 München (DE)**

(54) **PRIMER FOR POWER STORAGE DEVICE ELECTRODES, COMPOSITION FOR FORMING PRIMER LAYER, ELECTRODE FOR POWER STORAGE DEVICES, AND SECONDARY BATTERY**

(57)   To provide a secondary battery having excellent charge-discharge cycle characteristics (capacity retention rate) and discharge rate characteristics (discharge capacity ratio), as well as a primer for a power storage device electrode, a composition for forming a primer layer and an electrode for a power storage device, to obtain such a secondary battery.

A primer for a power storage device electrode, to form a primer layer between a current collector and an electrode active material layer, said primer for a power storage device electrode, containing a fluorinated copolymer which has units based on tetrafluoroethylene or chlorotrifluoroethylene and units based on ethylene, hexafluoropropylene or a perfluoro(alkyl vinyl ether), but does not substantially have units based on vinylidene fluoride, and which has adhesive functional groups that can react with hydroxy groups or can form hydrogen bonds.

EP 4 318 629 A1

**Description**

TECHNICAL FIELD

The present invention relates to a primer for a power storage device electrode, a composition for forming a primer layer, an electrode for a power storage device, and a secondary battery.

BACKGROUND ART

A power storage device such as a secondary battery is usually composed of an electrode, a nonaqueous electrolyte, a separator, etc., as required members. The electrode for a power storage device is usually produced by applying an electrode composite for a power storage device which comprises an electrode active material, a conductive material, a binder and a liquid medium, to the surface of a current collector and drying it.
As the binder for the electrode composite for a power storage device, it is known to use a fluorinated polymer or a hydrocarbon-type polymer.
However, the electrode composite containing a fluorinated polymer or a hydrocarbon-type polymer tends to be inadequate in adhesion to the current collector surface.
Therefore, a secondary battery using an electrode produced by using a binder containing a fluorinated polymer or a hydrocarbon-type polymer cannot obtain sufficient charge-discharge cycle characteristics (capacity retention rate) or discharge rate characteristics (discharge capacity ratio).
Therefore, in Patent Document 1, it is proposed to improve the adhesiveness of the electrode composite for a power storage device to the current collector surface by applying the electrode composite for a power storage device after forming a primer coating layer on the current collector in advance.
In Patent Document 1, a polyurethane resin or an epoxy resin is disclosed as the primer coating layer.

PRIOR ART DOCUMENT

PATENT DOCUMENT

Patent Document 1: JP-A-H10-149810

DISCLOSURE OF INVENTION

TECHNICAL PROBLEM

However, when a polyurethane resin or an epoxy resin is used as a primer coating layer, as in Patent Document 3, the primer coating layer deteriorates along with the charge and discharge of the secondary battery, and the adhesiveness of the electrode composite for a power storage device to the current collector surface cannot be maintained, and ultimately sufficient charge-discharge cycle characteristics (capacity retention rate) and discharge rate characteristics (discharge capacity ratio) could not be obtained.
The present invention was made in view of the above circumstances, and is intended to provide a secondary battery having excellent charge-discharge cycle characteristics (capacity retention rate) and discharge rate characteristics (discharge capacity ratio), as well as a primer for a power storage device electrode, a composition for forming a primer layer and an electrode for a power storage device, to obtain such a secondary battery.

SOLUTION TO PROBLEM

In order to accomplish the above object, the present invention has adopted the following constructions.

[1] A primer for a power storage device electrode, to form a primer layer between a current collector and an electrode active material layer, the primer for a power storage device electrode, containing a fluorinated copolymer which has units based on tetrafluoroethylene or chlorotrifluoroethylene and units based on ethylene, hexafluoropropylene or a perfluoro(alkyl vinyl ether), but does not substantially have units based on vinylidene fluoride, and which has adhesive functional groups that can react with hydroxy groups or can form hydrogen bonds.
[2] The primer according to [1], wherein the melting point of the fluorinated copolymer is at least 150°C.
[3] The primer according to [1] or [2], wherein the fluorinated copolymer has, as the adhesive functional groups, at least one type selected from the group consisting of carbonyl-containing groups and hydroxy groups.
[4] The primer according to [3], wherein the fluorinated copolymer has, as the adhesive functional groups, at least one type of carbonyl-containing groups selected from the group consisting of groups having carbonyl groups between carbon atoms of a hydrocarbon group, carbonate groups, carboxy groups, haloformyl groups, alkoxycarbonyl groups and acid anhydride groups.

[5] The primer according to any one of [1] to [4], wherein the fluorinated copolymer contains units based on tetrafluoroethylene.

[6] The primer according to any one of [1] to [5], wherein the fluorinated copolymer contains units base on ethylene.

[7] The primer according to any one of [1] to [6], wherein the fluorinated copolymer contains units based on tetrafluoroethylene and units based on ethylene.

[8] The primer according to any one of [1] to [7], which further contains a conductive material.

[9] A composition for forming a primer layer, comprising the primer for a power storage device electrode as defined in any one of [1] to [8] and a liquid medium.

[10] The composition according to [9], wherein the liquid medium is at least one type selected from the group consisting of aqueous media, aliphatic, aromatic hydrocarbons, alcohols, ethers, esters, ketones, nitrogen-containing compounds, sulfur-containing compounds and fluorinated compounds.

[11] The composition according to [9], wherein the liquid medium is at least one type selected from the group consisting of aqueous media, N-methylpyrrolidone, N,N-dimethylacetamide and $C_{6-10}$ aliphatic hydrocarbon compounds having one carbonyl group.

[12] An electrode for a power storage device, which comprises a current collector and an electrode active material layer formed on the current collector, and which has, between the current collector and the electrode active material layer, a primer layer containing the primer for a power storage device electrode as defined in any one of [1] to [8].

[13] An electrode for a power storage device, which comprises a current collector and an electrode active material layer formed on the current collector, and which has, between the current collector and the electrode active material layer, a primer layer formed from the composition for forming the primer layer as defined in any one of [9] to [11].

[14] An electrode for a power storage device, which comprises a current collector and an electrode active material layer formed on the current collector, and which has, between the current collector and the electrode active material layer, a primer layer formed from a powder of the primer for a power storage device electrode as defined in any one of [1] to [8].

[15] A secondary battery provided with the electrode for a power storage device according to any one of [12] to [14] and an electrolyte.

ADVANTAGEOUS EFFECTS OF INVENTION

According to the primer for a power storage device electrode, the composition for forming a primer layer, the electrode for a power storage device and the secondary battery, of the present invention, it is possible to obtain excellent charge-discharge cycle characteristics (capacity retention rate) and discharge rate characteristics (discharge capacity ratio).

DESCRIPTION OF EMBODIMENTS

The definitions of the following terms in this specification and the claims are as follows.

A "unit based on a monomer" is a general term for an atomic group to be directly formed by polymerization of one molecule of a monomer and for an atomic group obtainable by chemically converting a part of such an atomic group. In this specification, units based on a monomer may simply be referred to also as monomer units.

A "monomer" means a compound having a polymerizable carbon-carbon double bond.

A "melting point" means the temperature corresponding to the maximum value of the melting peak measured by a differential scanning calorimetry (DSC) method.

A "carbonyl-containing group" means a group having a carbonyl group (-C(=O)-) in its structure.

An "acid anhydride group" means a group represented by -C(=O)-O-C(=O)-.

The "average particle size" of a polymer is a value calculated by a cumulant method analysis from the autocorrelation function obtained by a dynamic light scattering method with respect to a sample having the polymer diluted with water to a solid content concentration of 1 mass%.

A "MFR (melt flow rate)" is a value (g/10 min) obtained by measuring the mass (g) of a copolymer that flows out from an orifice of 2 mm in diameter and 8 mm in length in 10 minutes, by using a melt indexer (manufactured by TECHNOL SEVEN CO., LTD.) in accordance with ASTM D3159 under conditions of a temperature of 220°C, 297°C or 380°C and a load of 49N, and converting it to the mass of the copolymer flowing out per 10 minutes. Here, as the temperature for the measurement, from the relation to the melting point, a temperature higher by from 30 to 80°C from the melting point is selected. For example, when the melting point is 300°C, the measurement is made at 380°C. When the melting point is 255°C, the measurement is made at 297°C. When the melting point is 183°C, the measurement is made at 220°C.

The "main chain" of a polymer refers to the polymerized chain formed by the linkage of at least two monomers.

In this specification, a compound represented by the formula 1 is referred to also as "compound 1".

<Primer for a power storage device electrode>

The primer for a power storage device electrode (hereinafter simply referred to also as the "primer") of the present invention contains a specific fluorinated copolymer (hereinafter referred to also as "copolymer A"). In addition to the copolymer A, the primer of the present invention may contain, as the case requires, polymers other than the copolymer A, additives, etc. to such an extent that the effect of the present invention will not be impaired.

[Copolymer A]

Copolymer A has units (hereinafter referred to also as "units a") based on tetrafluoroethylene (hereinafter referred to also as "TFE") or chlorotrifluoroethylene (hereinafter referred to also as "CTFE"), and units (hereinafter referred to also as "units b") based on ethylene (hereinafter referred to also as "E"), hexafluoropropylene (hereinafter referred to also as "HFP") or a perfluoro(alkyl vinyl ether (hereinafter referred to also as "PAVE"), but does not substantially have units based on vinylidene fluoride (hereinafter referred to also as "VdF") and has adhesive functional groups that can react with hydroxy groups or can form hydrogen bonds.

"Does not substantially have VdF units" means having no VdF units or, even if having VdF units, to such an extent that no influence is given to the chemical resistance of the copolymer, and "to such an extent that no influence is given to the chemical resistance of the copolymer" means, for example, that VdF units are at most 1 mol% to the units based on all monomers of the copolymer A. In the case of having units based on VdF, the VdF units are preferably at most 0.5 mol%, to the units based on all units of the copolymer A.

Copolymer A may have units based on monomers other than those listed above (excluding VdF) to such an extent that the effect of the present invention will not be impaired.

Copolymer A has, as units a, units based on TFE (hereinafter referred to also as "TFE units") or units based on CTFE (hereinafter referred to also as "CTFE units"), and may have both TFE units and CTFE units.

Since the chemical resistance and oxidation resistance will be good, it is preferred for copolymer A to have, as units a, at least TFE units, and it is more preferred to have only TFE units.

Copolymer A has, as units b, units based on ethylene (hereinafter referred to also as "E units"), units based on HFP (hereinafter referred to also as "HFP units") or units based on PAVE (hereinafter referred to also as "PAVE units") and may have two or three types of these units.

Since the adhesion between the current collector and the electrode active material layer will be good, the copolymer A has, as units b, preferably at least E units and more preferably only E units.

PAVE is preferably compound 1 represented by the following formula 1. As compound 1, two or more types may be used.

$$CF_2=CFOR^{f1} ... \qquad \text{Formula 1}$$

[In the formula 1, $R^{f1}$ is a $C_{1-10}$ perfluoroalkyl group, or a group containing an oxygen atom between carbon atoms of a $C_{2-10}$ perfluoroalkyl group.]

In the formula 1, as $R^{f1}$, since the chemical resistance of copolymer A will be excellent, a $C_{1-6}$ perfluoroalkyl group is preferred, and a $C_{1-3}$ perfluoroalkyl group is more preferred.

As monomers other than those described above, in addition to a monomer having adhesive functional groups as described below, a fluorinated vinyl monomer other than those described above, such as a compound represented by $CH_2=CY(CF_2)_nZ$ (Y and Z are each independently a fluorine atom or a hydrogen atom, and n is from 2 to 10) (hereinafter referred to also as "FAE"), an olefin-type vinyl monomer other than ethylene, such as propylene, a vinyl ether other than PAVE, a vinyl ester, a halogenated vinyl monomer having a halogen atom other than a fluorine atom, may be mentioned. As the monomers other than those described above, two or more types may be used.

In the above FAE, n in the formula is from 2 to 10, preferably from 2 to 8, more preferably from 2 to 6, particularly preferably 2, 4 or 6. When n is at least 2, cracking is less likely to form in the primer layer, and the adhesion between the current collector and the electrode active material layer tends to be easily maintained. When n is at most 10, the chemical resistance will be excellent. As FAE, two or more types may be used.

As preferred specific examples of such FAE, $CH_2=CH(CF_2)_2F$, $CH_2=CH(CF_2)_4F$, $CH_2=CH(CF_2)_6F$, $CH_2=CF(CF_2)_3H$, etc. may be mentioned. As FAE, $CH_2=CH-R^{f2}$ ($R^{f2}$ is a $C_{2-6}$ perfluoroalkyl group, the same applies below) is most preferred.

Copolymer A preferably has TFE units as units a and E units as units b.

As copolymer A having TFE units and E units, an E/TFE copolymer, an E/TFE/HFP copolymer, an E/TFE/CH$_2$=CH-R$^{f2}$ copolymer, an E/TFE/CF$_2$=CFOR$^{f1}$ copolymer and an E/TFE/HFP/CH$_2$=CH-R$^{f2}$ copolymer are preferred. Among them, an E/TFE copolymer, an E/TFE/CH$_2$=CH-R$^{f2}$ copolymer and an E/TFE/HFP copolymer are preferred, and an E/TFE copolymer and an E/TFE/CH$_2$=CH-R$^{f2}$ copolymer are particularly preferred.

Here, an E/TFE copolymer represents a copolymer having E units and TFE units. The same applies to other copolymers.

In a case where copolymer A has TFE units as units a and E units as units b, the preferred ratio of the respective units is as follows.

The ratio of TFE units to the total amount of E units and TFE units is preferably from 25 to 80 mol%, more preferably from 40 to 65 mol%, further preferably from 45 to 63 mol%. When the ratio of TFE units is at least 25 mol%, the chemical resistance will be excellent, and when the ratio of E units is at least 20 mol%, the adhesion between the current collector and the electrode active material layer will be good.

In a case where copolymer A has TFE units and E units and also has units based on a monomer other than a monomer having an adhesive functional group, the ratio of the units based on a monomer other than a monomer having an adhesive functional group is preferably from 0.1 to 10.0 mol%, more preferably from 0.2 to 8.0 mol%, further preferably from 0.3 to 6.0 mol%, particularly preferably from 0.4 to 4.0 mol%, to the total amount of E units and TFE units.

As the adhesive functional groups in copolymer A, functional groups selected from the group consisting of carbonyl-containing groups, hydroxy groups, epoxy groups, amide groups, amino groups and isocyanate groups, are preferred. The adhesive functional groups in copolymer A may be two or more types.

As the adhesive functional groups in copolymer A, from the viewpoint of adhesion to the current collector and the electrode active material layer, carbonyl-containing groups and hydroxy groups are preferred. Among them, carbonyl-containing groups are preferred.

As the carbonyl-containing groups, groups having a carbonyl group between carbon atoms of a hydrocarbon group, carbonate groups, carboxy groups, haloformyl groups, alkoxycarbonyl groups, acid anhydride groups, etc., may be mentioned.

Among them, acid anhydride groups and carboxy groups are preferred, and acid anhydride groups are particularly preferred.

As the hydrocarbon group in the groups having a carbonyl group between carbon atoms of a hydrocarbon group, a C$_{2-8}$ alkylene group may be mentioned. The number of carbon atoms in the alkylene group is the number of carbon atoms not including the carbon atoms in the carbonyl group. The alkylene group may be linear or branched.

A haloformyl group is represented by -C(=O)-X (where X is a halogen atom). As the halogen atom in a haloformyl group, a fluorine atom, a chlorine atom, etc. may be mentioned, and a fluorine atom is preferred.

The alkoxy group in an alkoxycarbonyl group may be linear or branched, and a C$_{1-8}$ alkoxy group is preferred, and a methoxy group and an ethoxy group are more preferred.

The content of adhesive functional groups in copolymer A is preferably from 10 to 60,000, more preferably from 100 to 50,000, further preferably from 100 to 10,000, particularly preferably from 300 to 5,000, to 1$\times$10$^6$ carbon atoms in the main chain of copolymer A. When the content of adhesive functional groups is within the above range, the adhesion to the current collector and the electrode active material layer will be further excellent.

The content of adhesive functional groups can be measured by a method such as a nuclear magnetic resonance (NMR) analysis, an infrared absorption spectrum analysis or the like. For example, by using a method such as an infrared absorption spectrum analysis as described in JP-A-2007-314720, the ratio (mol%) of units having adhesive functional groups in all units constituting the fluorinated copolymer is obtained, and from this ratio, the content of adhesive functional groups can be calculated.

The adhesive functional group is preferably present in at least one of the terminal group of the main chain and the pendant group of the main chain of copolymer A, from the viewpoint of adhesion to the current collector and the electrode active material layer.

Copolymer A in which an adhesive functional group is present in at least one of the terminal group of the main chain and the pendant group of the main chain, can be produced by a method such as copolymerizing a monomer having an adhesive functional group at the time of polymerization of the monomer, or polymerizing the monomer by using a chain transfer agent or a polymerization initiator that brings about the adhesive functional group. It is also possible to use these methods in combination.

It is particularly preferred to copolymerize a monomer having an adhesive functional group to produce a copolymer having such monomer units to make copolymer A in which the adhesive functional group is present at least as a pendant group of the main chain.

As the monomer having an adhesive functional group, a monomer having a carbonyl-containing group, a hydroxy group, an epoxy group, an amide group, an amino group or an isocyanate group, is preferred; a monomer having a carbonyl-containing group, is more preferred; a cyclic hydrocarbon monomer having an acid anhydride group (hereinafter referred to also as an "acid anhydride monomer") and a monomer having a carboxy group are further preferred; and an acid anhydride monomer is particularly preferred.

As the acid anhydride monomer, itaconic anhydride (hereinafter referred to also as "IAH"), citraconic anhydride (hereinafter referred to also as "CAH"), 5-norbornene-2,3-dicarboxylic anhydride (hereinafter referred to also as "NAH"), maleic anhydride, etc. may be mentioned.

As the acid anhydride monomer, two or more types may be used in combination.

As the acid anhydride monomer, IAH, CAH and NAH are preferred. When any one of IAH, CAH and NAH is used, copolymer A having acid anhydride groups can be easily produced without using the special polymerization method required when maleic anhydride is used (see JP-A-H11-193312).

As the acid anhydride monomer, IAH and NAH are particularly preferred, since the adhesion to the current collector and the electrode active material layer will be further excellent.

Further, in a case where an acid anhydride monomer is used, a portion of the acid anhydride group in the acid anhydride monomer may undergo hydrolysis, whereby in copolymer A, units based on a dicarboxylic acid (such as itaconic acid, citraconic acid, 5-norbornene-2,3-dicarboxylic acid or maleic acid) corresponding to the acid anhydride monomer may sometimes be contained.

As the monomer having a carboxy group, maleic acid, itaconic acid, citraconic acid, undecylenic acid or the like may be mentioned.

As the monomer having a hydroxy group, a hydroxyalkyl vinyl ether may be mentioned.

As the monomer having an epoxy group, an epoxy alkyl vinyl ether may be mentioned.

In a case where copolymer A has units based on a monomer having an adhesive functional group, the ratio of the units is preferably from 0.01 to 5.0 mol%, more preferably from 0.05 to 3.0 mol%, further preferably from 0.1 to 2.0 mol%, to the total number of units based on monomers in copolymer A.

When the ratio of the units based on the monomer having an adhesive functional group is at least 0.01 mol%, the adhesion to the current collector and the electrode active material layer will be excellent; when the ratio is at least 0.05 mol%, the adhesion will be more excellent; when the ratio is at least 0.1 mol%, the adhesion will be further excellent. When the ratio of the units based on the monomer having an adhesive functional group is at most 5.0 mol%, the chemical resistance and oxidation resistance will be excellent; when the ratio is at most 3.0 mol%, the chemical resistance and oxidation resistance will be more excellent; when the ratio is at most 2.0 mol%, the chemical resistance and oxidation resistance will be further excellent.

As the chain transfer agent which brings about an adhesive functional group, a chain transfer agent having a carboxy group, an ester bond, a hydroxy group or the like, is preferred. Specifically, acetic acid, acetic anhydride, methyl acetate, ethylene glycol, propylene glycol or the like may be mentioned.

As the polymerization initiator which brings about an adhesive functional group, a peroxide polymerization initiator such as peroxycarbonate, diacyl peroxide or peroxyester is preferred.

Specifically, di-n-propylperoxydicarbonate, diisopropylperoxycarbonate, tert-butylperoxyisopropyl carbonate, bis(4-tert-butylcyclohexyl)peroxydicarbonate, di-2-ethylhexylperoxydicarbonate, or the like, may be mentioned.

The shape of copolymer A to be used as a primer is preferably in a particle form since the mixability with other components such as conductive material, etc. will be excellent. When in a particle form, the average particle diameter is preferably from 0.01 to 50 $\mu$m, more preferably from 0.01 to 20 $\mu$m.

When the average particle diameter is at least 0.01 $\mu$m, it will be easy to function as a binder for other components such as conductive material, etc. When the average particle diameter is at most 50 $\mu$m, the mixability with other components such as conductive material, etc. will be excellent.

The particulate copolymer A may be in a state as dispersed in a liquid or may be in a powder form.

Of copolymer A, the melting point is preferably at least 150°C, more preferably from 160 to 320°C, further preferably from 180 to 260°C.

When the melting point is at least 150°C, the function will be maintained even at high temperatures. When the melting point is at most 20°C, the processability will be excellent.

MFR of copolymer A is preferably from 0.1 to 200, more preferably from 1 to 100. When MFR is at least 0.1, the moldability will be excellent. When MFR is at most 200, the mechanical strength of the primer will be excellent, and the adhesion to the electrode active material layer and the current collector will be excellent.

Copolymer A can be produced by a conventional method. For example, it can be produced by polymerizing TFE, ethylene and an acid anhydride monomer.

At the time of polymerizing monomers, it is preferred to use a radical polymerization initiator.

As the polymerization method, a bulk polymerization method, a solution polymerization method using an organic solvent (a fluorinated hydrocarbon, a chlorinated hydrocarbon, a fluorinated chlorohydrocarbon, an alcohol, a hydrocarbon, or the like), a suspension polymerization method using an aqueous medium and an appropriate organic solvent as the case requires, or an emulsion polymerization method using an aqueous medium and an emulsifier, may be mentioned, and a solution polymerization method is preferred.

In the case of polymerizing TFE, ethylene and an acid anhydride monomer, the concentration of the acid anhydride monomer in the polymerization is preferably from 0.01 to 5 mol%, more preferably from 0.1 to 3 mol%, further preferably from 0.1 to 2 mol%, to all monomers. When the concentration of the acid anhydride monomer is within the above range, the polymerization rate tends to be proper. If the concentration of the acid anhydride monomer is too high, the polymerization rate tends to decrease.

As the acid anhydride monomer is consumed in the polymerization, the consumed amount should better be continuously or intermittently supplied into the polymerization tank to maintain the concentration of the acid anhydride monomer to be within the aforementioned range.

[Other polymers]

The primer of the present invention may contain polymers having a function as a primer other than copolymer A to such an extent that the effect of the present invention will not be impaired.

As such polymers other than copolymer A, polytetrafluoroethylene, a tetrafluoroethylene-propylene copolymer, a polyimide, a polyamideimide, a polyetherimide, a polyether ether ketone, a polyether ketone ketone, a polyphenylene sulfide, a polyethersulfone, a polysulfone, a polyamide, a polyphenylene ether, a polymethacrylate, a polymethyl methacrylate, a polyacrylonitrile, a polycarbonate, etc. may be mentioned.

In a case where the primer of the present invention contains polymers other than copolymer A, the ratio of copolymer A to all polymers is preferably at least 50 mass%, more preferably at least 70 mass%, further preferably at least 90 mass%.

When the ratio of copolymer A is at least 50 mass%, it will be easy to fully obtain the effect of the present invention.

Here, the primer of the present invention may contain, as a polymer other than copolymer A, polyvinylidene fluoride, a vinylidene fluoride-hexafluoropropylene copolymer or a tetrafluoroethylene-vinylidene fluoride copolymer, but it is preferred not to contain it. In a case where the primer of the present invention contains polyvinylidene fluoride, a vinylidene fluoride-hexafluoropropylene copolymer or a tetrafluoroethylene-vinylidene fluoride copolymer, its total amount is preferably at most 10 mass%, more preferably at most 5 mass%, further preferably at most 1 mass%.

[Conductive material]

The primer of the present invention preferably contains a conductive material. By containing the conductive material, it is possible to prevent the internal resistance of the secondary battery from increasing.

As the conductive material, conductive carbon such as acetylene black, Ketjen black, carbon black, graphite, vapor-phase grown carbon fiber, and carbon nanotubes, may be mentioned.

The content of the conductive material in the primer is preferably from 30 to 95 mass%, more preferably from 45 to 85 mass%, to the entire solid content of the primer.

When the content of the conductive material is at least the preferred lower limit value, the conductivity will be improved, and the function as a battery will be improved. When the content of the conductive material is at most the preferred upper limit value, the adhesion to the current collector and the electrode active material layer will be excellent.

[Additives]

The primer of the present invention may contain various known additives. As the additives, an emulsifier, a defoamer, a leveling agent, a preservative, a pH adjuster, a dispersant such as a cellulose resin, an acrylic resin, a urethane resin or a urea resin, a radical trapping agent such as a hindered amine light stabilizer (HALS), and an acid acceptor such as magnesium oxide, calcium hydroxide or the like, may be mentioned.

<Composition for forming primer layer>

As the primer of the present invention, copolymer A and other polymers, conductive materials and additives contained as the case requires, are preferably used to form the primer layer, as dispersed or dissolved in a liquid medium. The composition for forming the primer layer of the present invention is a composition containing the above-described primer of the present invention and a liquid medium.

Here, the primer layer obtainable by using the composition for forming the primer layer of the present invention does not contain any liquid medium. Further, the primer layer in the electrode for a power storage device as described below can also be produced without using any liquid medium.

There is no restriction on the type of the liquid medium, but it is preferably a liquid medium selected from the group consisting of aqueous media, aliphatic and aromatic hydrocarbons, alcohols, ethers, esters, ketones, nitrogen-containing compounds, sulfur-containing compounds, and fluorinated compounds. As the liquid medium, it is more preferably a liquid medium selected from the group consisting of an aqueous medium, N-methylpyrrolidone, N,N-dimeth-

ylacetamide, and a $C_{6-10}$ aliphatic hydrocarbon compound having one carbonyl group (hereinafter referred to also as a "carbonyl group-containing aliphatic compound"). Further, the liquid medium may be a mixed liquid medium consisting of two or more types of liquid medium.

As the aliphatic and aromatic hydrocarbon compounds, hexane, heptane, octane, cyclohexane, methylcyclohexane, ethylcyclohexane, benzene, ethylbenzene, diethylbenzene, pentylbenzene, isopropylbenzene, toluene, xylene, cymene, and mesitylene may be mentioned.

As the alcohols, methanol, ethanol, isopropanol, butanol, cyclohexanol, phenol, ethylene glycol, diethylene glycol, propylene glycol, and dipropylene glycol, may be mentioned.

As the ethers, diethyl ether, tetrahydrofuran, dioxane, anisole, ethyl benzyl ether, cresyl methyl ether, diphenyl ether, dibenzyl ether, phenetol, butyl phenyl ether, methyl monoglycidyl ether, ethyl monoglycidyl ether, ethylene glycol monomethyl ether, ethylene glycol dimethyl ether, propylene glycol monomethyl ether, and propylene glycol dimethyl ether, may be mentioned.

As the esters, cyclohexyl acetate, ethyl 3-ethoxypropionate, dioxane, methyl lactate, ethyl lactate, methyl acetate, ethyl acetate, butyl acetate, methyl pyruvate, ethyl pyruvate, methyl methoxypropionate, ethyl ethoxypropionate, ethylene glycol monoacetate, ethylene glycol monomethyl ether acetate, ethylene glycol monoethyl ether acetate, diethylene glycol monoacetate, diethylene glycol diethyl ether, propylene glycol monoacetate, dipropylene glycol monoacetate, propylene glycol diacetate, propylene glycol monomethyl ether acetate, and propylene glycol monoethyl ether acetate, may be mentioned.

As the ketones, γ-butyrolactone, acetone, methyl ethyl ketone, 2-heptanone, cycloheptanone, cyclohexanone, methyl-n-pentyl ketone, methyl isobutyl ketone, and methyl isopentyl ketone, may be mentioned.

As the nitrogen-containing compounds, dimethylformamide, N,N-dimethylformamide, N,N-dimethylacetamide, and N-methyl-2-pyrrolidone, may be mentioned.

As the sulfur-containing compound, dimethyl sulfoxide may be mentioned.

As the fluorinated compounds, perfluorocarbons, hydrofluoroethers, hydrochlorofluorocarbons, hydrofluorocarbons, and fluoropolyethers, may be mentioned.

As the aqueous media, water and water containing a water-soluble organic solvent may be mentioned.

The water-soluble organic solvent is an organic solvent that is miscible with water in any proportion. As the water-soluble organic solvent, the above-mentioned alcohols (but excluding ether alcohols), the above-mentioned ether alcohols and nonprotic polar solvents are preferred.

As the nonprotic polar solvents, for example, N,N-dimethylformamide, dimethyl sulfoxide, tetrahydrofuran (hereinafter referred to also as "THF"), acetonitrile, acetone, 3-methoxy-N,N-dimethylpropanamide, 3-butoxy-N,N-dimethylpropanamide, 3-methoxy-3-methyl-1-butanol, triethylene glycol dimethyl ether, and tetraethylene glycol dimethyl ether, may be mentioned.

As the water-soluble organic solvent in a case where the liquid medium is an aqueous medium, from such a viewpoint that the compatibility of copolymer A and the aqueous medium will be improved, whereby a uniform film will be easily formed on the article, an ether alcohol is preferred, and dipropylene glycol, tripropylene glycol or dipropylene glycol monomethyl ether is more preferred.

In a case where the aqueous medium is water containing a water-soluble organic solvent, the content of the water-soluble organic solvent is preferably from 1 to 80 parts by mass, more preferably from 5 to 60 parts by mass, to 100 parts by mass of water.

The carbonyl group-containing aliphatic compound can be used without any practical problem, so long as it is a liquid at a temperature at which copolymer A, etc. are to be dispersed or dissolved, but it is preferably liquid at room temperature. The melting point of the carbonyl group-containing aliphatic compound is preferably at most 230°C. The molecular structure of the carbonyl group-containing aliphatic compound is not restricted, and, for example, the carbon skeleton may be linear, branched, or cyclic, may have an etheric oxygen between the carbon-carbon bonds constituting the main or side chain, and some of the hydrogen atoms attached to the carbon atoms may be substituted by halogen atoms such as fluorine atoms.

As specific examples of the carbonyl group-containing aliphatic compound, ketones such as cyclic ketones or chained ketones, esters such as chained esters or monoesters such as glycols, and carbonates, may preferably be mentioned. Among these, cyclic ketones are more preferred. Two or more types of these may be used in combination.

In the following, more specific examples of the compounds exemplified above as the above-described carbonyl group-containing aliphatic compound to be preferably used in the present invention, will be shown.

As specific examples of the above-mentioned cyclic ketones, 2-propylcyclopropanone, 2-isopropylcyclopropanone, 2,2,3-trimethylcyclopropanone, 2-ethyl-3-methylcyclopropanone, 2-butylcyclopropanone, 2-isobutylcyclopropanone, 2-tert-butylcyclopropanone, 2-methyl-3-propylcyclopropanone, 2-methyl-3-isopropylcyclopropanone, 2-ethyl-3,3-dimethylcyclopropanone, 2,2,3,3-tetramethylcyclopropanone, 2-pentylcyclopropanone, 2-isopentylcyclopropanone, 2-butyl-3-methylcyclopropanone, 2-ethyl-3-propylcyclopropanone, 2-hexylcyclopropanone, 2-methyl-3-pentylcyclopropanone, 2-butyl-3-ethylcyclopropanone, 2,3-dipropylcyclopropanone, 2-heptylcyclopropanone, 2-hexyl-3-methylcyclopropanone, 2-ethyl-3-pentylcyclopropanone, 2-butyl-3-propylcyclopropanone, 2-ethylcyclobutanone, 3-ethylcyclobutanone, 2,2-dimethylcyclobutanone, 2,3-dimethylcyclobutanone, 3,3-dimethylcyclobutanone, 2,4-dimethylcyclobutanone, 2-propylcyclobutanone, 3-propylcyclobutanone, 2-isopropylcyclobutanone, 3-isopropylcyclobutanone, 2,2,3-trimethylcyclobutanone, 2,3,3-trimethylcyclobutanone, 2,3,4-trimethylcyclobutanone, 2,2,4-trimethylcyclobutanone, 2-butylcyclobutanone, 2-isobutylcyclobutanone, 2-tert-butylcyclobutanone, 3-butylcyclobutanone, 3-isobutylcyclobutanone, 3-tert-butylcyclobutanone, 2-pentylcyclobutanone, 3-pentylcyclobutanone, 2-isopentylcyclobutanone, 3-isopentylcyclobutanone, 2-hexylcyclobutanone, 3-hexylcyclobutanone, 2-methylcyclopentanone, 3-methylcyclopentanone, 2-ethylcyclopentanone, 3-ethylcyclopentanone, 2,2-dimethylcyclopentanone, 2,3-dimethylcyclopentanone, 3,3-dimethylcyclopentanone, 2,5-dimethylcyclopentanone, 2,4-dimethylcyclopentanone, 3,4-dimethylcyclopentanone, 2-propylcyclopentanone, 2-isopropylcyclopentanone, 3-propylcyclopentanone, 3-isopropylcyclopentanone, 2,2,5-trimethylcyclopentanone, 2-butylcyclopentanone, 2-isobutylcyclopentanone, 2-tert-butylcyclopentanone, 3-butylcyclopentanone, 3-isobutylcyclopentanone, 3-tert-butylcyclopentanone, 2,2,5,5-tetramethylcyclopentanone, 2-pentylcyclopentanone, 2-isopentylcyclopentanone, 3-pentylcyclopentanone, 3-isopentylcyclopentanone, cyclohexanone, 2-methylcyclohexanone, 3-methylcylcohexanone, 4-methylcyclopentanone, 2-ethylcyclohexanone, 3-ethylcyclohexanone, 4-ethylcyclohexanone, 2,2-dimethylcyclohexanone, 2,3-dimethylcyclohexanone, 2,4-dimethylcyclohexanone, 2,5-dimethylcyclohexanone, 2,6-dimethylcyclohexanone, 2-propylcyclohexanone, 2-isopropylcyclohexanone, 3-propylcyclohexanone, 3-isopropylcyclohexanone, 4-propylcyclohexanone, 4-isopropylcyclohexanone, 2,2,6-trimethylcyclohexanone, 2,2,4-trimethylcyclohexanone, 2,4,4-trimethylcyclohexanone, 3,3,5-trimethylcyclohexanone, 2,4,6-trimethylcyclohexanone, 2-butylcyclohexanone, 2-isobutylcyclohexanone, 2-tert-butylcyclohexanone, 3-butylcyclohexanone, 3-isobutylcyclohexanone, 3-tert-butylcyclohexanone, 4-butylcyclohexanone, 4-isobutylcyclohexanone, 4-tert-butylcyclohexanone, 2,2-diethylcyclohexanone, 2,4-diethylcyclohexanone, 2,6-diethylcyclohexanone, 3,5-diethylcyclohexanone, 2,2,6,6-tetramethylcyclohexanone, cycloheptanone, 2-methylcycloheptanone, 3-methylcycloheptanone, 4-methylcycloheptanone, 2-ethylcycloheptanone, 3-ethylcycloheptanone, 4-ethylcycloheptanone, 2,2-dimethylcycloheptanone, 2,7-dimethylcycloheptanone, 2-propylcycloheptanone, 2-isopropylcycloheptanone, 3-propylcycloheptanone, 3-isopropylcycloheptanone, 4-propylcycloheptanone, 4-isopropylcycloheptanone, 2,2,7-trimethylcycloheptanone, cyclooctanone, 2-methylcyclooctanone, 3-methylcyclooctanone, 4-methylcyclooctanone, 5-methylcyclooctanone, 2-ethylcyclooctanone, 3-ethylcyclooctanone, 4-ethylcyclooctanone, 5-ethylcyclooctanone, 2,2-dimethylcyclooctanone, 2,8-dimethylcyclooctanone, cyclononanone, 2-methylcyclononanone, 3-methylcyclononanone, 4-methylcyclononanone, 5-methylcyclononanone, cyclodecanone, isophorone, (-)-fencon ((1R,4S)-1,3,3-trimethylbicyclo[2.2.1]heptan-2-one), (+)-fencon ((1S,4R)-1,3,3-trimethylbicyclo[2.2.1]heptan-2-one)), etc., may be mentioned.

As specific examples of the above-mentioned chained ketones, 2-hexanone, 3-hexanone, methyl isobutyl ketone, ethyl isopropyl ketone, 3,3-dimethyl-2-butanone, 2-heptanone, 3-heptanone, 4-heptanone, diisopropyl ketone, 5-methyl-2-hexanone, 2-octanone, 3-octanone, 4-octanone, 5-methyl-3-heptanone, 2-nonanone, 3-nonanone, 4-nonanone, 5-nonanone, diisobutyl ketone, 2-decanone, 3-decanone, 4-decanone, and 5-decanone, may be mentioned.

As specific examples of the above-mentioned chained esters, pentyl formate, isopentyl formate, cyclopentyl formate, hexyl formate, cyclohexyl formate, heptyl formate, octyl formate, 2-ethylhexyl formate, nonyl formate, butyl acetate, isobutyl acetate, sec-butyl acetate, tert-butyl acetate, pentyl acetate, isopentyl acetate, cyclopentyl acetate, hexyl acetate, cyclohexyl acetate, heptyl acetate, octyl acetate, 2-ethylhexyl acetate, propyl propionate, isopropyl propionate, butyl propionate, isobutyl propionate, sec-butyl propionate, tert-butyl propionate, pentyl propionate, isopentyl propionate, cyclopentyl propionate, hexyl propionate, cyclohexyl propionate, heptyl propionate, 2,2,3,3,3-pentafluoropropyl propionate, 2,2,3,3-tetrafluoropropyl propionate, ethyl butyrate, propyl butyrate, isopropyl butyrate, butyl butyrate, isobutyl butyrate, sec-butyl butyrate, tert-butyl butyrate, pentyl butyrate, isopentyl butyrate, cyclopentyl butyrate, hexyl butyrate, cyclohexyl butyrate, 2,2,2-trifluoroethyl butyrate, 2,2,3,3,3-pentafluoropropyl butyrate, 2,2,3,3-tetrafluoropropyl butyrate, ethyl isobutyrate, propyl isobutyrate, isopropyl isobutyrate, butyl isobutyrate, isobutyl isobutyrate, sec-butyl isobutyrate, tert-butyl isobutyrate, pentyl isobutyrate, isopentyl isobutyrate, cyclopentyl isobutyrate, hexyl isobutyrate, cyclohexyl isobutyrate, 2,2,2-trifluoroethyl isobutyrate, 2,2,3,3,3-pentafluoropropyl isobutyrate, 2,2,3,3-tetrafluoropropyl isobutyrate, methyl valerate, ethyl valerate, propyl valerate, isopropyl valerate, butyl valerate, isobutyl valerate, sec-butyl valerate, tert-butyl valerate, pentyl valerate, isopentyl valerate, 2,2,2-trifluoroethyl valerate, 2,2,3,3,3-pentafluoropropyl valerate, 2,2,3,3-tetrafluoropropyl valerate, methyl isovalerate, ethyl isovalerate, propyl isovalerate, isopropyl isovalerate, butyl isovalerate, isobutyl isovalerate, sec-butyl isovalerate, tert-butyl isovalerate, pentyl isovalerate, isopentyl isovalerate, 2,2,2-trifluoroethyl isovalerate, 2,2,3,3,3-pentafluoropropyl isovalerate, 2,2,3,3-tetrafluoropropyl isovalerate, methyl pivalate, ethyl pivalate, propyl pivalate, isopropyl pivalate, butyl pivalate, isobutyl pivalate, sec-butyl pivalate, tert-butyl pivalate, pentyl pivalate, isopentyl pivalate, 2,2,2-trifluoroethyl pivalate, 2,2,3,3,3-pentafluoropropyl pivalate, 2,2,3,3-tetrafluoropropyl pivalate, methyl hexanoate, ethyl hexanoate, propyl hexanoate, isopropyl hexanoate, butyl hexanoate, isobutyl hexanoate, sec-butyl hexanoate, tert-butyl hexanoate, 2,2,2-trifluoroethyl hexanoate, 2,2,3,3,3-pentafluoropropyl hexanoate, 2,2,3,3-tetrafluoropropyl hexanoate, methyl heptanoate, ethyl heptanoate, propyl heptanoate, isopropyl heptanoate, 2,2,2-trifluoroethyl heptanoate, 2,2,3,3,3-pentafluoropropyl heptanoate, 2,2,3,3-tetrafluoropropyl heptanoate, methyl cyclohexanecarboxylate, ethyl cyclohexanecarboxylate, propyl cyclohexanecarboxylate, isopropyl cyclohexanecarboxylate, 2,2,2-trifluoroethyl cyclohexanecarboxylate, 2,2,3,3,3-pentafluoropropyl cyclohexanecarboxylate, 2,2,3,3-tetrafluoropropyl cyclohexanecarboxylate, methyl octanoate, ethyl octanoate, 2,2,2-trifluoroethyl octanoate, methyl nonanoate, butyl trifluoroacetate, pentyl trifluoroacetate, hexyl trifluoroacetate, heptyl trifluoroacetate, octyl trifluoroacetate, propyl pentafluoropropionate, butyl pentafluoropropionate, pentyl pentafluoropropionate, hexyl pentafluoropropionate, heptyl pentafluoropropionate, ethyl perfluorobutanoate, propyl perfluorobutanoate, butyl perfluorobutanoate, pentyl perfluorobutanoate, hexyl perfluorobutanoate, methyl perfluoropentanoate, ethyl perfluoropentanoate, propyl perfluoropentanoate, butyl perfluoropentanoate, pentyl perfluoropentanoate, methyl perfluorohexanoate, ethyl perfluorohexanoate, propyl perfluorohexanoate, butyl perfluorohexanoate, methyl perfluoroheptanoate, ethyl perfluoroheptanoate, propyl perfluoroheptanoate, methyl perfluorooctanoate, ethyl perfluorooctanoate, etc., may be mentioned.

As specific examples of the above-mentioned monoesters of glycols, 2-ethoxyethyl acetate, 2-propoxyethyl acetate, 2-butoxyethyl acetate, 2-pentyloxyethyl acetate, 2-hexyloxyethyl acetate, 1-methoxy-2-acetoxypropane, 1-ethoxy-2 acetoxypropane, 1-propoxy-2-acetoxypropane, 1-butoxy-2-acetoxypropane, 1-pentyloxy-2-acetoxypropane, 3-methoxybutyl acetate, 3-ethoxybutyl acetate, 3-propoxybutyl acetate, 3-butoxybutyl acetate, 3-methoxy-3-methylbutyl acetate, 3-ethoxy-3-methylbutyl acetate, 3-propoxy-3-methylbutyl acetate, 4-methoxybutyl acetate, 4-ethoxybutyl acetate, 4-propoxybutyl acetate, 4-butoxybutyl acetate, etc., may be mentioned.

As specific examples of the above-mentioned carbonates, butyl methyl carbonate, ethyl propyl carbonate, dipropyl carbonate, diisopropyl carbonate, butyl propyl carbonate, butyl isopropyl carbonate, isobutylpropyl carbonate, tert-butyl propyl carbonate, tert-butyl isopropyl carbonate, dibutyl carbonate, diisobutyl carbonate, di-tert-butyl carbonate, bis(2,2,3,3,3-pentafluoropropyl) carbonate, bis(2,2,3,3-tetrafluoropropyl) carbonate, bis(1,1,1,3,3,3-hexafluoroisopropyl) carbonate, bis(2,2,3,3,4,4,4-heptafluorobutyl) carbonate, bis(perfluoro-tert-butyl) carbonate, etc., may be mentioned.

The total content (polymer concentration) of copolymer A and other polymers contained as the case requires in the composition for forming the primer layer, is preferably from 5 to 70 mass%, more preferably from 7 to 60 mass%, particularly preferably from 9 to 55 mass%, to the entire amount of the composition for forming the primer layer. When the polymer concentration is at least the lower limit value in the above range, the adhesion to the current collector and the electrode active material layer will be excellent. When it is at most the upper limit value in the above range, the conductivity will be improved, and the function as the battery will be improved.

The solid content concentration of the composition for forming the primer layer is preferably from 1 to 50 mass%, more preferably from 3 to 40 mass%, particularly preferably from 5 to 30 mass%, to the entire amount of the composition for forming the primer layer, since it is thereby possible to apply the composition for forming the primer layer in a thin layer.

In a case where the composition for forming the primer layer contains a conductive material, the solid content concentration of the composition for forming the primer layer is preferably from 3 to 60 mass%, more preferably from 5 to 50 mass%, to the entire amount of the composition for forming the primer layer. In such a case, the polymer concentration in the composition for forming the primer layer is preferably from 3 to 60 mass%, more preferably from 5 to 50 mass%, to the entire amount of the solid content.

<Electrode composite for power storage device>

The electrode composite for obtaining an electrode for a power storage device of the present invention (hereinafter simply referred to also as "electrode composite") comprises a binder and an electrode active material. As the case requires, it may also contain a conductive material, and may contain other components other than these.

The binder to be used in the present invention is not particularly limited, and any known binder may be used as the case requires. Among them, a binder in which at least part of the polymer component is a fluorinated polymer is preferred, since the usefulness of the effect obtainable by the primer of the present invention will be high.

The binder to be used in the present invention preferably contains the above-mentioned copolymer A in the same manner as the primer of the present invention.

The preferred form of the binder to be used in the present invention is the same as the preferred form of the primer of the present invention.

The electrode active material to be used in the present invention is not particularly limited, and a known material may be used as appropriate.

As a positive electrode active material, a metal oxide such as $MnO_2$, $V_2O_5$, $V_6O_{13}$ or the like, a metal sulfide such as $TiS_2$, $MoS_2$, FeS or the like, and a lithium complex metal oxide including a transition metal such as Co, Ni, Mn, Fe, Ti or the like, such as $LiCoO_2$, $LiNiO_2$, $LiMn_2O_4$, $LiNi_{0.8}Co_{0.15}Al_{0.05}O_2$, $LiNi_{1/3}Co_{1/3}Mn_{1/3}O_2$, $LiFePO_4$ or the like, a compound having part of the transition metal element in such a compound replaced by another metal, etc., may be exemplified. Further, it is also possible to use a conductive polymer material such as polyacetylene, poly-p-phenylene, etc. Furthermore, it is possible to use one having a part or entire surface of such a material covered with a carbon material or an inorganic compound.

As a negative electrode active material, for example, carbonaceous materials such as coke, graphite, mesophase pitch pellets, carbides of polymer compounds such as phenolic resins or polyparaphenylene, vapor-phase grown carbon fibers, carbon fibers, etc., may be mentioned. Further, metals such as Si, Sn, Sb, Al, Zn and W which can be alloyed with lithium, may be mentioned, and, for example, silicon oxide represented by the formula $SiO_x$ (x is preferably from 0.5 to 1.5), as represented by silicon monoxide, may be mentioned. As the electrode active material, one having a conductive material attached to the surface by e.g. a mechanical modification method may also be used.

In the case of an electrode composite for a lithium-ion secondary battery, the electrode active material to be used may be one capable of reversibly inserting and releasing lithium ions by applying an electric potential in an electrolyte, and it is possible to use either an inorganic or organic compound.

In particular, it is preferred that the electrode composite to be used in the production of the positive electrode contains a conductive material, whereby the electrical contact between electrode active materials will be improved, and the electrical resistance within the active material layer can be reduced, and thus, it is possible to improve the discharge rate characteristics of the nonaqueous secondary battery.

As the conductive material, acetylene black, Ketjen black, carbon black, graphite, vapor-phase grown carbon fiber, and conductive carbon such as carbon nanotubes, may be mentioned.

When the electrode composite contains a conductive material, by the addition of a small amount of the conductive material, the effect of reducing the electrical resistance will be large, such being desirable.

As components other than those mentioned above, it is possible to use well known components in the electrode composite. As specific examples, water-soluble polymers such as carboxymethylcellulose, polyvinyl alcohol, polyacrylic acid, and polymethacrylic acid, may be mentioned.

The ratio of the total of the polymers (the total of copolymer A and other polymers contained as the case requires) in the electrode composite is preferably from 0.1 to 20 parts by mass, more preferably from 0.5 to 10 parts by mass, particularly preferably from 1 to 8 parts by mass, to 100 parts by mass of the electrode active material.

When the electrode composite contains a conductive material, the ratio of the conductive material in the electrode composite is more than 0 part by mass, preferably at most 20 parts by mass, more preferably from 1 to 10 parts by mass, particularly preferably from 3 to 8 parts by mass, to 100 parts by mass of the electrode active material.

When the electrode composite contains a liquid medium, the solid content concentration in the electrode composite is preferably from 30 to 95 mass%, more preferably from 35 to 90 mass%, particularly preferably from 40 to 85 mass%.

<Electrode for power storage device>

The electrode for a power storage device of the present invention comprises a current collector and an electrode active material layer formed on the current collector, and has a primer layer containing the primer for the electrode for a power storage device of the present invention between the current collector and the electrode active material layer.

The current collector is not particularly limited so long as it is made of a conductive material, but usually a metal foil, a metal mesh or a metal porous body of e.g. aluminum, nickel, stainless steel, copper or the like, may be mentioned, As the positive electrode current collector, aluminum is suitably used, and as the negative electrode current collector, copper is suitably used. The thickness of the current collector is preferably from 1 to 100 $\mu$m.

The electrode for a power storage device is obtainable by forming a primer layer on at least one side, preferably on both sides, of the current collector by using copolymer A being the primer of the present invention, followed by forming an electrode active material layer on the primer layer by using an electrode composite.

The primer layer is obtainable, for example, by applying the composition for forming the primer of the present invention to at least one side, preferably to both sides, of the current collector and removing the liquid medium in the primer composition by drying. As the case requires, the primer layer after drying may be pressed and formed in a desired thickness.

Further, the primer layer may also be formed without using a liquid medium by using a powder consisting of particles of copolymer A being the primer of the present invention.

There is no particular limit to the thickness of the primer layer, but from 0.1 to 100 $\mu$m is preferred, and from 0.5 to 50 $\mu$m is more preferred.

When the thickness of the primer layer is at least the lower limit value in the preferred range, the adhesion of the electrode composite to the current collector will be excellent. When the thickness of the primer layer is at most the upper limit value in the preferred range, the conductivity will be improved, and the function as a battery will be improved.

The electrode active material layer is obtainable, for example, by applying an electrode composite containing a liquid medium on the primer layer formed on the current collector and removing the liquid medium by drying. As the case requires, the electrode active material layer after drying may be pressed and formed in a desired thickness. Further, by using a powder electrode composite that does not contain a liquid medium, the electrode active material layer may also be formed without using a liquid medium.

The amount of the electrode composite containing a liquid medium applied in terms of the solid content is preferably from 1 to 3,000 g/m², more preferably from 5 to 1,000 g/m². When the amount of the electrode composite applied is at least the lower limit value in the preferred range, the function as a battery will be improved. When the amount of the electrode composite applied is at most the upper limit value in the preferred range, the size of the battery can be reduced.

The thickness of the electrode active material layer is preferably from 1 to 500 $\mu$m, more preferably from 5 to 300 $\mu$m. When the thickness of the electrode active material layer is at least the lower limit value in the preferred range, the function as a battery will be improved. When the thickness of the electrode active material layer is at most the upper limit value in the preferred range, the size of the battery can be reduced.

Various coating methods may be mentioned as methods for applying the composition for forming a primer layer and the electrode composite containing a liquid medium, respectively. For example, methods such as a doctor blade method, a dip method, a reverse roll method, a direct roll method, a gravure method, an extrusion method, and a brush coating method, may be mentioned. The coating temperature is not particularly restricted, but usually, a temperature near room temperature is preferred. Drying can be conducted by using various drying methods, and, for example, drying with warm air, hot air or low-humidity air, vacuum drying, and drying by irradiation with (far) infrared rays, electron beams, etc. may be mentioned. The drying temperature is not particularly restricted, but is usually from room temperature to 200°C in a heated vacuum dryer. Pressing can be conducted by using a die press, roll press, or the like.

In the case of the primer of the present invention that does not contain a liquid medium, a primer layer may be formed by placing a powder consisting of particles of copolymer A being the primer, on a current collector and calendering it. Otherwise, the film for forming the primer layer may be made by calendering treatment, and thereafter, it may be laminated on a current collector.

In a case where the binder for a power storage device is a dry binder that does not contain a liquid medium, the electrode may be formed by placing the electrode composite on a primer layer formed on a current collector and then calendering it. Otherwise, an electrode film may be formed by calendering treatment of the electrode composite, and thereafter, it may be laminated on a primer layer formed on a current collector.

<Power storage device>

The power storage device using the primer composition for an electrode of the power storage device and the electrode for a power storage device of the present invention, comprises at least a pair of electrodes and an electrolyte interposed between the pair of electrodes. Further, in a case where the electrolyte is a liquid, it is preferably provided with a separator.

As the power storage device, although not particularly limited, for example, a battery, an electrochemical sensor, an electrochromic device, an electrochemical switching device, an electrolytic capacitor, or an electrochemical capacitor, may be mentioned.

As the battery, although not particularly limited so long as a battery having electrodes and an electrolyte, for example, an alkali metal battery, an alkali metal ion battery, an alkaline earth metal ion battery, a radical battery, a solar cell, or a fuel cell may be mentioned.

In a preferred form, the above battery is particularly an alkaline metal battery, an alkaline metal ion battery, or an alkaline earth metal battery, for example, a lithium battery, a lithium ion battery, a sodium ion battery, a magnesium battery, a lithium air battery, a sodium sulfur battery, or a lithium sulfur battery, preferably a lithium ion battery. The above battery may be a primary battery or a secondary battery, preferably a secondary battery.

The present invention is also a secondary battery provided with the above-described electrodes and electrolyte for a power storage device. Preferably, the above secondary battery is an alkaline metal ion secondary battery, particularly a lithium-ion secondary battery.

In the following, the lithium-ion secondary battery will be described in detail.

<Lithium-ion secondary battery>

The lithium-ion secondary battery as a power storage device is equipped with the electrode for the power storage device of the present invention as at least one of the positive and negative electrodes, and is also equipped with an electrolyte. Further, in a case where the electrolyte is in a liquid form, it is preferably equipped with a separator.

The electrolyte solution contains an electrolyte and a solvent. As the solvent, a nonprotic organic solvent, such as an alkyl carbonate such as dimethyl carbonate (DMC), ethylene carbonate (EC), diethyl carbonate (DEC), propylene carbonate (PC), butylene carbonate (BC), or methyl ethyl carbonate (MEC), an ester such as $\gamma$-butyrolactone or methyl formate, an ether such as 1,2-dimethoxyethane or tetrahydrofuran, or a sulfur-containing compound such as sulfolane or dimethyl sulfoxide, may be used. Dimethyl carbonate, ethylene carbonate, propylene carbonate, diethyl carbonate, or methyl ethyl carbonate is particularly preferred, since a particularly high ionic conductivity can readily be obtained, and the operating temperature range will be wide. These may be used alone independently, or two or more types may be used in combination.

As the electrolyte, a lithium salt such as $LiClO_4$, $LiBF_4$, $LiPF_6$, $LiAsFs$, $CFsSOsLi$, $(CF_3SO_2)_2NLi$, or $(FSO_2)_2NLi$ may be mentioned.

<Solid electrolyte>

In the battery of the present disclosure, as the electrolyte, a solid electrolyte may be used instead of the above-mentioned liquid electrolyte. As the solid electrolyte, for example, an inorganic electrolyte or an organic electrolyte may be mentioned.

As the inorganic electrolyte, for example, an oxide-type solid electrolyte, a sulfide-type solid electrolyte or a hydride-type solid electrolyte may be mentioned.

As the oxide-type solid electrolyte, for example, a perovskite-type oxide, a NASICON-type oxide, a LISICON-type oxide or a garnet-type oxide may be mentioned.

As the sulfide-type solid electrolyte, for example, a $Li_2S$-$P_2S_5$-type compound, a $Li_2S$-$SiS_2$-type compound, a $Li_2S$-$GeS_2$-type compound, a $Li_2S$-$B_2S_3$-type compound, a $Li_2S$-$P_2S_3$-type compound, $Lil$-$Si_2S$-$P_2S_5$, $Lil$-$Li_2S$-$P_2O_5$, $Lil$-$Li_3PO_4$-$P_2S_5$ or $Li_{10}GeP_2S_{12}$ may be mentioned.

As the hydride-type solid electrolyte material, for example, $LiBH_4$, $LiBH_4$-$3KI$, $LiBH_4$-$PI_2$, $LiBH_4$-$P_2S_5$, $LiBH_4$-$LiNH_2$, $3LiBH_4$-$Lil$, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, or $Li_4(BH_4)(NH_2)_3$ may be mentioned.

As the organic electrolyte, for example, a polymer-type solid electrolyte may be mentioned.

As the polymer-type solid electrolyte, for example, a polyoxyethylene-type polymer compound or an organic polymer electrolyte such as a polymer compound containing at least one type selected from the group consisting of polyorganosiloxane chains and polyoxyalkylene chains, may be mentioned.

EXAMPLES

In the following, the present invention will be described with reference to Examples, but the present invention is not limited to these Examples. The tests and evaluations in Examples and Comparative Examples were conducted by the following methods. Here, Ex. 1 to 8 are Examples of the present invention, and Ex. 9 and 10 are Comparative Examples.

<Measurement methods>

[Melting point (°C)]

Obtained from the endothermic peak at the time of heating to 300°C in an air atmosphere at a rate of 10°C/min by using a scanning differential thermal analyzer (DSC7200 manufactured by SII).

[Average particle diameter and D90 of powder]

Using a laser diffraction and scattering particle size analyzer (LA-920 instrument) manufactured by HORIBA, Ltd., a powder was dispersed in water, the particle size distribution was measured, and the average particle diameter ($\mu$m) and D90 ($\mu$m) were calculated.

[Loosely packed bulk density and tightly packed bulk density]

The loosely packed bulk density and tightly packed bulk density of a powder were measured by using the method described in [0117] and [0118] of WO2016/017801.

[Content of acid anhydride groups (mol%)]

Using a film of 200 $\mu$m in thickness obtained by press molding a fluorinated polymer, the intensity of absorption derived from the acid anhydride groups that appears in the vicinity of from 1,800 to 1,900 $cm^{-1}$ was measured by a Fourier transform infrared spectrometer (manufactured by Thermo Fisher Scientific Inc., Nicolet iS10), and the content of the acid anhydride groups (the ratio of units having acid anhydride groups in all units constituting the fluorinated polymer) was calculated.

[MFR (Melt Flow Rate)]

Using a melt indexer (manufactured by Techno Seven), in accordance with ASTM D3159, under a condition of a load of 49N, the mass (g) of a copolymer flowing out of an orifice 2 mm in diameter and 8 mm in length in 10 minutes, was measured and adopted as MFR (g/10 min). As the temperature for the measurement, 220°C, 297°C or 380°C was used.

<Copolymers used for primer>

The following copolymers were used in the form of a powder or dispersion to form a primer layer.

· Copolymer A-1: Copolymer having TFE, $CF_2=CF-O-(CF_2)_3F$ and NAH polymerized in the same manner as in Example 5 of WO2015/182702 (melting point: 300°C, MFR at 380°C: 25 g/10 min).
· Copolymer A-2: Copolymer having TFE, ethylene and $CH_2=CH(CF_2)_2F$ and IAH polymerized in the same manner as in Example 2 of WO2015/182702 (melting point: 255°C, MFR at 297°C: 26 g/10 min).
· Copolymer A-3: Copolymer having TFE, ethylene, HFP, $CH_2=CH(CF_2)_4F$ and IAH polymerized in the same manner as in Example 3 of WO2015/182702 (melting point: 183°C, MFR at 220°C: 11 g/10 min).

[Copolymer A-1 (powder)]

Using a jet mill (single-track jet mill Model FS-4 manufactured by Seishin Enterprise Co., Ltd.), copolymer A-1 was ground to copolymer A-1 (powder) under conditions of a grinding pressure of 0.5 MPa and a processing speed of 1 kg/hr.
The obtained copolymer A-1 (powder) had an average particle size of 2.58 μm, a D90 of 7.1 μm, a loosely packed bulk density of 0.278 g/mL, and a tightly packed bulk density of 0.328 g/mL.

[Copolymer A-2 (powder)]

Copolymer A-2 was ground under the same conditions as for copolymer A-1 to obtain copolymer A-2 (powder).
The obtained copolymer A-2 (powder) had an average particle size of 3.54 μm, a D90 of 9.2 μm, a loosely packed bulk density of 0.332 g/mL, and a tightly packed bulk density of 0.395 g/mL.

[Copolymer A-3 (powder)]

Copolymer A-3 was ground under the same conditions as for copolymer A-1 to obtain copolymer A-3 (powder).
The obtained copolymer A-3 (powder) had an average particle size of 2.92 μm, a D90 of 8.2 μm, a loosely packed bulk density of 0.313 g/mL, and a tightly packed bulk density of 0.388 g/mL.

[Copolymer A-3 (DIPK dispersion)]

In a 1 L pressure-resistant glass reaction vessel with a stirrer, 50 g of copolymer A-3 (powder) and 450 g of diisopropyl ketone (DIPK) were put, and heated to 150°C and stirred for 1 hour to disperse the copolymer A-3 (powder). Thereafter, the dispersion was cooled to room temperature with stirring to obtain copolymer A-3 (DIPK dispersion).

<Ex. 1>

(Composition 1 for forming primer layer)

By mixing the following respective components in a ball mill for 5 hours, composition 1 for forming a primer layer having copolymer A-1 dispersed in water, was prepared.

· Carbon powder (specific surface area: 150 m$^2$/g): 40 parts by mass
· Copolymer A-1 (powder): 40 parts by mass
· Nonionic surfactant (Futargent 250, manufactured by NEOS COMPANY LIMITED): 3 parts by mass
· Distilled water: 320 parts by mass

(Preparation of electrolyte solution)

By adding $LiPF_6$ to a mixed solvent of ethylene carbonate as a high dielectric constant solvent, and ethyl methyl carbonate as a low viscosity solvent (in a volume ratio of 30:70) so as to be a concentration of 1.0 mol/liter, to obtain an electrolyte solution.

(Preparation of positive electrode laminate and positive electrode)

By using $LiNi_{1/3}Mn_{1/3}Co_{1/3}O_2$ as a positive electrode active material, carbon black as a conductive material, and an N-methyl-2-pyrrolidone dispersion of polyvinylidene fluoride (PVdF) as a binding agent, a positive electrode composite slurry mixed so that the solid content ratio of the active material, the conductive material and the binding agent became to be 92/3/5 (mass% ratio), was prepared.

On a 20 $\mu$m thick aluminum foil current collector, the above composition 1 was applied so as to become a dry thickness of 10 $\mu$m, and dried, and further the obtained positive electrode composite slurry was applied thereon to be a dry thickness of 100 $\mu$m, dried, and then, compression molded by a press machine to obtain a positive electrode laminate. The positive electrode laminate was punched out to a size of 1.6 cm in diameter by a punching machine to prepare a circular positive electrode.

(Preparation of negative electrode laminate and negative electrode)

By using artificial graphite powder and amorphous silicon (SiO) as a negative electrode active material, an aqueous dispersion of sodium carboxymethylcellulose (concentration of sodium carboxymethylcellulose: 1 mass%) as a thickener, and an aqueous dispersion of styrene-butadiene rubber (concentration of styrene-butadiene rubber: 50 mass%) as a binder, a negative electrode composite slurry mixed so that the solid content ratio of the active material, the thickener, and the binder became to be 93/4.6/1.2/1.2 (mass% ratio), were prepared.

On a 20 $\mu$m thick copper foil, the above composition 1 was applied so as to become a dry thickness of 10 $\mu$m, and dried, and further thereon, the obtained negative electrode composite slurry was applied so as to become a dry thickness of 100 $\mu$m, dried, and then, compression molded by a press machine to obtain a negative electrode laminate. The negative electrode laminate was punched out to a size of 1.6 cm in diameter by a punching machine to prepare a circular negative electrode.

(Preparation of lithium-ion secondary battery)

The above circular positive electrode and negative electrode were placed to face each other via a 20 $\mu$m thick microporous polyethylene film (separator) and housed in a pouch. Into this pouch, the electrolyte solution obtained as described above was injected, and after the electrolyte solution was sufficiently penetrated to the separator, etc., sealing was conducted, followed by pre-charging and aging, to prepare a coin-type lithium-ion secondary battery.

<Ex. 2>

(Composition 2 for forming primer layer)

By mixing the following respective components in a ball mill for 5 hours, a composition 2 for forming a primer layer in which copolymer A-1 was dispersed in N-methylpyrrolidone (NMP), was prepared.

  · Carbon powder (specific surface area: 150 $m^2$/g): 40 parts by mass
  · Copolymer A-1 (powder): 40 parts by mass
  · Nonionic surfactant (FTX-218P, manufactured by NEOS COMPANY LIMITED): 3 parts by mass
  NMP: 320 parts by mass

(Preparation of positive electrode laminate and positive electrode)

The positive electrode laminate and positive electrode were prepared in the same manner as in Ex. 1, except that the composition 2 was used instead of the composition 1.

(Preparation of negative electrode laminate and negative electrode)

The negative electrode laminate and negative electrode were prepared in the same manner as in Ex. 1, except that the composition 2 was used instead of the composition 1.

(Preparation of lithium-ion secondary battery)

A lithium-ion secondary battery was prepared in the same manner as in Ex. 1, except that the positive electrode and negative electrode obtained in Ex. 2 were used.

<Ex. 3>

(Composition 3 for forming primer layer)

By mixing the following respective components by a Henschel mixer, a composition 3 for forming a primer layer in a powder form, using copolymer A-1, was prepared.

· Carbon powder (specific surface area: 150 m$^2$/g): 40 parts by mass
· Fluorinated copolymer (A) powder: 40 parts by mass

(Preparation of electrolyte solution)

An electrolyte solution was obtained by adding LiPF$_6$ to a mixed solvent of ethylene carbonate as a high dielectric constant solvent, and ethyl methyl carbonate as a low viscosity solvent (volume ratio of 30:70) so as to become a concentration of 1.0 mol/liter.

(Preparation of positive electrode laminate and positive electrode)

The positive electrode composite slurry was prepared in the same manner as in Ex. 1.
The obtained composition 3 was calender-treated to prepare a 10 μm thick film for forming a primer layer. The film for forming a primer layer was laminated onto a 20 μm thick aluminum foil current collector, and further thereon, the obtained positive electrode composite slurry was applied so as to become a dry thickness of 100 μm and dried, and then, compression molded by a press machine, to obtain a positive electrode laminate. The positive electrode laminate was punched out to a size of 1.6 cm in diameter by a punching machine to prepare a circular positive electrode.

(Preparation of negative electrode laminate and negative electrode)

A negative electrode composite slurry was prepared in the same manner as in Ex. 1.
The obtained composition 3 was calender-treated to prepare a 10 μm thick film for forming a primer layer. The film for forming a primer layer was laminated onto a 20 μm thick copper foil, and further thereon, the obtained negative electrode composite slurry was applied so as to become a dry thickness of 100 μm, dried and then compression molded by a press machine to obtain a negative electrode laminate. The negative electrode laminate was punched out to a size of 1.6 cm in diameter by a punching machine to prepare a circular negative electrode material.

(Preparation of lithium-ion secondary battery)

A lithium-ion secondary battery was prepared in the same manner as in Ex. 1, except that the positive electrode and negative electrode obtained in Ex. 3 were used.

<Ex. 4>

(Composition 4 for forming primer layer)

A composition 4 for forming a primer layer in which copolymer A-2 was dispersed in water, was prepared in the same manner as in Ex. 1, except that copolymer A-2 (powder) was used instead of copolymer A-1 (powder).

(Preparation of positive electrode laminate and positive electrode)

A positive electrode laminate and positive electrode were prepared in the same manner as in Ex. 1, except that the composition 4 was used instead of the composition 1.

(Preparation of negative electrode laminate and negative electrode)

The negative electrode laminate and negative electrode were prepared in the same manner as in Ex. 1, except that the composition 4 was used instead of the composition 1.

(Preparation of lithium-ion secondary battery)

A lithium-ion secondary battery was prepared in the same manner as in Ex. 1, except that the positive electrode and negative electrode obtained in Ex. 4 were used.

<Ex. 5>

(Composition 5 for forming primer layer)

A composition 5 for forming a primer layer in a powder form using copolymer A-2 was prepared in the same manner as in Ex. 3, except that copolymer A-2 (powder) was used instead of copolymer A-1 (powder).

(Preparation of positive electrode laminate and positive electrode)

The positive electrode laminate and positive electrode were prepared in the same manner as in Ex. 3, except that the composition 5 was used instead of the composition 3.

(Preparation of negative electrode laminate and negative electrode)

The negative electrode laminate and negative electrode were prepared in the same manner as in Ex. 3, except that the composition 5 was used instead of the composition 3.

(Preparation of lithium-ion secondary battery)

A lithium-ion secondary battery was prepared in the same manner as in Ex. 3, except that the positive electrode and negative electrode obtained in Ex. 5 were used.

<Ex. 6>

(Composition 6 for forming primer layer)

A composition 6 for forming a primer layer in which copolymer A-3 was dispersed in water, was prepared in the same manner as in Ex. 1, except that copolymer A-3 (powder) was used instead of copolymer A-1 (powder).

(Preparation of positive electrode laminate and positive electrode)

The positive electrode laminate and positive electrode were prepared in the same manner as in Ex. 1, except that the composition 6 was used instead of the composition 1.

(Preparation of negative electrode laminate and negative electrode)

The negative electrode laminate and negative electrode were prepared in the same manner as in Ex. 1, except that the composition 6 was used instead of the composition 1.

(Preparation of lithium-ion secondary battery)

A lithium-ion secondary battery was prepared in the same manner as in Ex. 1, except that the positive electrode and negative electrode obtained in Ex. 6 were used.

<Ex. 7>

(Composition 7 for forming primer layer)

By mixing the following respective components by a ball mill for 5 hours, a composition 7 for forming a primer layer in which copolymer A-3 was dispersed in diisopropyl ketone (DIPK), was prepared.

- Carbon powder (specific surface area: 150 $m^2$/g): 10 parts by mass
- Copolymer A-3 (DIPK dispersion): 100 parts by mass

(Preparation of positive electrode laminate and positive electrode)

The positive electrode laminate and positive electrode were prepared in the same manner as in Ex. 1, except that the composition 7 was used instead of the composition 1.

(Preparation of negative electrode laminate and negative electrode)

The negative electrode laminate and negative electrode were prepared in the same manner as in Ex. 1, except that the composition 7 was used instead of the composition 1.

(Preparation of lithium-ion secondary battery)

A lithium-ion secondary battery was prepared in the same manner as in Ex. 1, except that the positive electrode and negative electrode obtained in Ex. 7 were used.

<Ex. 8>

(Composition 8 for forming primer layer)

A composition 8 for forming a primer layer in a powder form using copolymer A-3 was prepared in the same manner as in Ex. 3, except that copolymer A-3 (powder) was used instead of copolymer A-1 (powder).

(Preparation of positive electrode laminate and positive electrode)

The positive electrode laminate and positive electrode were prepared in the same manner as in Ex. 3, except that the composition 8 was used instead of the composition 3.

(Preparation of negative electrode laminate and negative electrode)

The negative electrode laminate and negative electrode were prepared in the same manner as in Ex. 3, except that the composition 8 was used instead of the composition 3.

(Preparation of lithium-ion secondary battery)

A lithium-ion secondary battery was prepared in the same manner as in Ex. 3, except that the positive electrode and negative electrode obtained in Ex. 8 were used.

<Ex. 9>

(Composition 9 for forming primer layer)

By mixing the following respective components by a ball mill for 5 hours, a composition 9 for forming a polyurethane-type primer layer, was prepared.

- Carbon powder (specific surface area: 150 $m^2$/g): 30 parts by mass
- Polyurethane (Miractran P490, manufactured by Nippon Miractran Company Limited): 65 parts by mass
- Polyisocyanate (CORONATE L, manufactured by TOSOH CORPORATION): 5 parts by mass
- Methyl ethyl ketone (MEK): 1,200 parts by mass, methyl isobutyl ketone (MIBK): 800 parts by mass

(Preparation of positive electrode laminate and positive electrode)

The positive electrode laminate and positive electrode were prepared in the same manner as in Ex. 1, except that the composition 9 was used instead of the composition 1.

(Preparation of negative electrode laminate and negative electrode)

The negative electrode laminate and negative electrode were prepared in the same manner as in Ex. 1, except that the composition 9 was used instead of the composition 1.

(Preparation of lithium-ion secondary battery)

A lithium-ion secondary battery was prepared in the same manner as in Ex. 1, except that the positive electrode and negative electrode obtained in Ex. 9 were used.

<Ex. 10>

(Composition 10 for forming primer layer)

By mixing the following respective components by a ball mill for 5 hours, a composition 10 for forming a primer layer containing an epoxy resin, was prepared.

· Carbon powder (specific surface area: 150 m$^2$/g): 30 parts by mass
· Epoxy resin (EPICLON H-205-60KM, manufactured by Dainippon Ink and Chemicals, Incorporated): 40 parts by mass
· Polyisocyanate (CORONATE L, manufactured by TOSOH CORPORATION): 5 parts by mass
· Silane coupling agent (KBM573, manufactured by Shin-Etsu Chemical Co., Ltd.): 25 parts by mass
· Methyl ethyl ketone (MEK): 1,200 parts by mass, methyl isobutyl ketone (MIBK): 800 parts by mass

(Preparation of positive electrode laminate and positive electrode)

The positive electrode laminate and positive electrode were prepared in the same manner as in Ex. 3, except that the composition 10 was used instead of the composition 3.

(Preparation of negative electrode laminate and negative electrode)

The negative electrode laminate and negative electrode were prepared in the same manner as in Ex. 3, except that the composition 10 was used instead of the composition 3.

(Preparation of lithium-ion secondary battery)

A lithium-ion secondary battery was prepared in the same manner as in Ex, 3, except that the positive electrode and negative electrode obtained in Ex. 10 were used.

<Evaluation of adhesion of electrode laminate for power storage device>

Each of the positive electrode laminate and the negative electrode laminate in each of the above Ex. was cut into a strip of 2 cm in width × 10 cm in length and fixed with the coated surface of the electrode composite facing up. A cellophane tape was bonded to the coated surface of the electrode composite, and the strength (N/cm) at the time of peeling the tape in a direction of 90° at a rate of 10 mm/min, was measured 5 times, and the average value was taken as the peeling strength. The larger this value, the better the adhesion (bonding) by the primer layer, i.e. the better the adhesion between the electrode composite and the current collector, which were bonded by the primer layer.
The results are shown in Tables 1 and 2.

<Evaluation of charge-discharge cycle characteristics of lithium-ion secondary battery>

With respect to the lithium-ion secondary battery produced in each Ex., a cycle of charging to 4.3V (voltage represents voltage to lithium) at 25°C at a constant current equivalent to 0.2C, further charging until the current value reaches 0.02C at the upper charging voltage, and then discharging to 3V at a constant current equivalent to 0.2C, was carried out. The capacity retention rate (unit: %) of the discharged capacity at the 100th cycle to the discharged capacity at the first cycle discharge, was obtained and used as an index of the charge-discharge characteristics of the battery. The higher the value of the capacity retention rate, the better.

Here, 1C represents the current value at which the reference capacity of a battery is discharged in one hour, and 0.5C represents the current value of 1/2 thereof.

The results are shown in Tables 1 and 2.

<Evaluation of discharge rate characteristics of lithium-ion secondary battery>

Using the lithium-ion battery produced in each Ex., charging was conducted at 25°C to 4.3V (voltage represents voltage to lithium) at a constant current equivalent to 0.2C, and further charging was conducted until the current value reached 0.02C at the upper charging voltage. Then, after discharging to 3V at a constant current corresponding to 0.2C, charging was conducted in the same manner as described above, and discharging was conducted to 3V at a constant current corresponding to 3C, whereby evaluation of the discharge rate characteristics was conducted. The maintenance rate of the discharge capacity after 3C discharge (3C discharge capacity) when the discharge capacity after 0.2C discharge (0.2C discharge capacity) was 100%, was calculated based on the following formula and used as the initial discharge capacity ratio. A high initial discharge capacity ratio means that the resistance in the electrode is small and excellent.

$$\text{Discharge capacity ratio (\%)} = (\text{3C discharge capacity/0.2C discharge capacity}) \times 100$$

The results are shown in Tables 1 and 2.

[Table 1]

| | | Ex. 1 | Ex. 2 | Ex. 3 | Ex. 4 | Ex. 5 |
|---|---|---|---|---|---|---|
| Primer composition | Resin | Copolymer A-1 | | | Copolymer A-2 | |
| | Liquid medium | Water | NMP | - | Water | - |
| Peel strength N/cm | Positive electrode laminate | 9.2 | 10.8 | 10.2 | 17.9 | 18.1 |
| | Negative electrode laminate | 10.9 | 11.5 | 11.4 | 19.1 | 18.8 |
| Charge-discharge cycle characteristics | Capacity retention rate % | 85 | 86 | 85 | 89 | 88 |
| Discharge rate characteristics (Initial) | Discharge capacity ratio % | 79 | 80 | 78 | 79 | 77 |

[Table 2]

| | | Ex. 6 | Ex. 7 | Ex. 8 | Ex. 9 | Ex. 10 |
|---|---|---|---|---|---|---|
| Primer composition | Resin | Copolymer A-3 | | | Polyurethane | Epoxy resin |
| | Liquid medium | Water | DIPK | - | MEK, MIBK | MEK, MIBK |
| Peel strength N/cm | Positive electrode laminate | 17.4 | 16.9 | 17.7 | 5.2 | 10.2 |
| | Negative electrode laminate | 18.8 | 17.4 | 18.6 | 4.9 | 10.7 |
| Charge-discharge cycle characteristics | Capacity retention rate % | 87 | 85 | 86 | 79 | 79 |
| Discharge rate characteristics (Initial) | Discharge capacity ratio % | 77 | 78 | 79 | 77 | 76 |

As shown in Tables 1 and 2, the positive electrode laminate and the negative electrode laminate in each of Ex. 1 to 8 containing copolymer A as a primer, each exhibited good adhesion. Further, the lithium-ion secondary batteries obtained in Ex. 1 to 8 were good in both charge-discharge cycle characteristics and discharge rate characteristics.

In contrast, the positive electrode laminate and the negative electrode laminate in Ex. 9, in which a polymer other than copolymer A was used as the primer, were poor in adhesion. Further, the lithium-ion secondary battery obtained in Ex. 9 was poor in charge-discharge cycle characteristics and discharge rate characteristics. Although the positive electrode laminate and the negative electrode laminate in Ex. 10 showed adhesion, the lithium-ion secondary battery obtained in Ex 10 was poor in charge-discharge cycle characteristics and discharge rate characteristics.

The entire disclosure of Japanese Patent Application No. 2021-050217, filed on March 24, 2021 including specification, claims and summary is incorporated herein by reference in its entirety.

## Claims

1. A primer for a power storage device electrode, to form a primer layer between a current collector and an electrode active material layer, the primer for a power storage device electrode, containing a fluorinated copolymer which has units based on tetrafluoroethylene or chlorotrifluoroethylene and units based on ethylene, hexafluoropropylene or a perfluoro(alkyl vinyl ether), but does not substantially have units based on vinylidene fluoride, and which has adhesive functional groups that can react with hydroxy groups or can form hydrogen bonds.

2. The primer according to Claim 1, wherein the melting point of the fluorinated copolymer is at least 150°C.

3. The primer according to Claim 1 or 2, wherein the fluorinated copolymer has, as the adhesive functional groups, at least one type selected from the group consisting of carbonyl-containing groups and hydroxy groups.

4. The primer according to Claim 3, wherein the fluorinated copolymer has, as the adhesive functional groups, at least one type of carbonyl-containing groups selected from the group consisting of groups having carbonyl groups between carbon atoms of a hydrocarbon group, carbonate groups, carboxy groups, haloformyl groups, alkoxycarbonyl groups and acid anhydride groups.

5. The primer according to any one of Claims 1 to 4, wherein the fluorinated copolymer contains units based on tetrafluoroethylene.

6. The primer according to any one of Claims 1 to 5, wherein the fluorinated copolymer contains units base on ethylene.

7. The primer according to any one of Claims 1 to 6, wherein the fluorinated copolymer contains units based on tetrafluoroethylene and units based on ethylene.

8. The primer according to any one of Claims 1 to 7, which further contains a conductive material.

9. A composition for forming a primer layer, comprising the primer for a power storage device electrode as defined in any one of Claims 1 to 8 and a liquid medium.

10. The composition according to Claim 9, wherein the liquid medium is at least one type selected from the group consisting of aqueous media, aliphatic, aromatic hydrocarbons, alcohols, ethers, esters, ketones, nitrogen-containing compounds, sulfur-containing compounds and fluorinated compounds.

11. The composition according to Claim 9, wherein the liquid medium is at least one type selected from the group consisting of aqueous media, N-methylpyrrolidone, N,N-dimethylacetamide and $C_{6-10}$ aliphatic hydrocarbon compounds having one carbonyl group.

12. An electrode for a power storage device, which comprises a current collector and an electrode active material layer formed on the current collector, and which has, between the current collector and the electrode active material layer, a primer layer containing the primer for a power storage device electrode as defined in any one of Claims 1 to 8.

13. An electrode for a power storage device, which comprises a current collector and an electrode active material layer formed on the current collector, and which has, between the current collector and the electrode active material layer, a primer layer formed from the composition for forming the primer layer as defined in any one of Claims 9 to 11.

**14.** An electrode for a power storage device, which comprises a current collector and an electrode active material layer formed on the current collector, and which has, between the current collector and the electrode active material layer, a primer layer formed from a powder of the primer for a power storage device electrode as defined in any one of Claims 1 to 8.

**15.** A secondary battery provided with the electrode for a power storage device according to any one of Claims 12 to 14 and an electrolyte.

## INTERNATIONAL SEARCH REPORT

| International application No. |
| --- |
| **PCT/JP2022/013652** |

**A.    CLASSIFICATION OF SUBJECT MATTER**

*H01M 4/13*(2010.01)i; *H01M 4/139*(2010.01)i; *H01G 11/28*(2013.01)i
FI:    H01M4/13; H01M4/139; H01G11/28

According to International Patent Classification (IPC) or to both national classification and IPC

**B.    FIELDS SEARCHED**

Minimum documentation searched (classification system followed by classification symbols)

H01M4/13; H01M4/139; H01G11/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2015/182702 A1 (ASAHI GLASS CO., LTD.) 03 December 2015 (2015-12-03)<br>claims, examples 1-5, paragraph [0042] | 1-15 |
| A | JP 2013-241587 A (NIPPON SYNTHETIC CHEM. IND. CO., LTD.) 05 December 2013 (2013-12-05)<br>claims, examples 1-4 | 1-15 |
| A | JP 2018-5972 A (ASAHI GLASS CO., LTD.) 11 January 2018 (2018-01-11)<br>claims, paragraphs [0072]-[0099] | 1-15 |
| A | JP 2015-97173 A (TOYOTA INDUSTRIES CORP.) 21 May 2015 (2015-05-21)<br>claims | 1-15 |
| A | JP 10-149810 A (SONY CORP.) 02 June 1998 (1998-06-02)<br>claims | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 April 2022** | **10 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/013652**

| Patent document cited in search report | | | Publication date (day/month/year) | Patent family member(s) | | | Publication date (day/month/year) |
|---|---|---|---|---|---|---|---|
| WO | 2015/182702 | A1 | 03 December 2015 | US | 2017/0058065 | A1 | |
| | | | | claims, examples 1-5, paragraph [0101] | | | |
| | | | | EP | 3150645 | A1 | |
| | | | | CN | 106459291 | A | |
| JP | 2013-241587 | A | 05 December 2013 | US | 2015/0038633 | A1 | |
| | | | | claims, examples 1-4 | | | |
| | | | | WO | 2013/161975 | A1 | |
| | | | | EP | 2842998 | A1 | |
| | | | | CN | 104245829 | A | |
| JP | 2018-5972 | A | 11 January 2018 | WO | 2016/076371 | A1 | |
| JP | 2015-97173 | A | 21 May 2015 | (Family: none) | | | |
| JP | 10-149810 | A | 02 June 1998 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10149810 A
- JP 2007314720 A
- JP H11193312 A
- WO 2016017801 A
- WO 2015182702 A
- JP 2021050217 A